# EUROPÄISCHE PATENTANMELDUNG

(11) **EP 4 660 554 A1**
(43) Veröffentlichungstag der Anmeldung: **10.12.2025**
(21) Anmeldenummer: 24180782.5
(22) Anmeldetag: 07.06.2024
(51) Int. Cl.: F24S 20/60, H02S 10/00

(54) **VERFAHREN ZUM ERSTELLEN EINES BELEGUNGSPLANS FÜR DIE ANORDNUNG EINER MEHRZAHL VON SOLARELEMENTEN AUF EINER BELEGUNGSFLÄCHE**

(71) Anmelder: Fraunhofer-Gesellschaft zur Förderung der angewandten Forschung e.V., 80686 München (DE)
(72) Erfinder: MAURER, Christoph, 79110 Freiburg (DE); WACKER, Simon, 79110 Freiburg (DE)
(74) Vertreter: LBP Lemcke, Brommer & Partner Patentanwälte mbB

(57) **Zusammenfassung**

Die Erfindung betrifft ein Verfahren zum Erstellen eines Belegungsplans für die Anordnung einer Mehrzahl von Solarelementen (3) auf einer Belegungsfläche (1), insbesondere einer Gebäudehülle, mit folgenden Verfahrensschritten:
A Bereitstellen der Belegungsfläche (1) als Flächenmodell, welches Flächenmodell insbesondere Abmessungen der Belegungsfläche (1), Informationen zur Anordnung von Hindernissen (2.1; 2.2; 2.3; 2.4) und/oder Informationen zu Spezialflächen mit besonderen Anforderungen beinhaltet;
B Bereitstellen eines Musters (4) aus Solarelementen (3);
C Übereinanderlegen des Musters (4) aus Solarelementen (3) und des Flächenmodells;
D Bestimmen der Solarelemente (3) des Musters (4) aus Solarelementen (3), die innerhalb der Belegungsfläche (1) liegen und nicht mit Hindernissen (2.1; 2.2; 2.3; 2.4) und/oder Spezialflächen kollidieren, als platzierbare Solarelemente (5.1; 5.2; 5.3; 5.4);
E Drehen des Musters (4) aus Solarelementen (3) und/oder Verschieben des Musters (4) aus Solarelementen (3);
F Bestimmen der Solarelemente (3) des Musters (4) aus Solarelementen (3), die innerhalb der Belegungsfläche (1) liegen und nicht mit Hindernissen (2.1; 2.2; 2.3; 2.4) und/oder Spezialflächen kollidieren, als platzierbare Solarelemente (5.1; 5.2; 5.3; 5.4);

## Beschreibung

Die Erfindung betrifft ein Verfahren zum Erstellen eines Belegungsplans für die Anordnung einer Mehrzahl von Solarelementen auf einer Belegungsfläche gemäß Anspruch 1.

Zur Energiegewinnung werden mehr und mehr Solarelemente in Gebäude, insbesondere auch Gebäudefassaden integriert. Die Verwendung von photovoltaischen Solarzellen zur Umwandlung elektromagnetischer Strahlung in elektrische Energie erfolgt üblicherweise mit einem Solarmodul, welches eine Mehrzahl von Solarzellen aufweist. Diese Solarzellen sind zur Bildung eines Solarmoduls typischerweise in Form von Solarzellenstrings verschaltet. Gegebenenfalls sind weitere Komponenten wie Leistungsoptimierer oder Wechselrichter vorgesehen. Ein solcher Solarzellenstring umfasst mehrere Solarzellen, die elektrisch leitende miteinander verbunden sind. Üblicherweise sind diese Solarzellen in einem Solarzellenstring in Reihe geschaltet, da eine einzelne Solarzelle eher eine geringere Spannung, jedoch einen hohen Strom erzeugt.

Sowohl auf der Ebene der Solarzellen erfolgt typischerweise eine Verschaltung zu Solarmodulen als auch auf der Ebene der Solarmodule zu größeren Einheiten. Darüber hinaus liegen auch weitere solaraktive Elemente im Rahmen der Erfindung, wie bspw. Solarthermieelemente. Im Weiteren wird jedoch übergreifend von Solarelementen gesprochen.

Bei der Anordnung solcher Solarelemente auf der Gebäudehülle ergeben sich verschiedene Herausforderungen, insbesondere an welchen Stellen auf der Gebäudehülle Solarelemente platziert werden. Dabei spielen unterschiedlichste Aspekte, wie Wirtschaftlichkeit, Ästhetik und Umgebungsbedingungen sowie die verwendeten Solarelemente eine Rolle. Auch verschattete oder teilverschattete Gebäudehüllen oder eine spezielle Architektur können besondere Herausforderungen darstellen.

Aus dem Stand der Technik ist es bekannt, dass Planerlnnen das sogenannte Fugenbild erstellen. Gewünscht sind hierbei ein möglichst hoher Solarertrag, bei einer gleichzeitig ästhetisch ansprechenden Gebäudehülle und niedrigen Kosten. Naturgemäß gibt es sehr viele Möglichkeiten, wie eine Mehrzahl Solarelemente auf einer Gebäudehülle angeordnet werden kann, sodass es für Planerlnnen schwer bzw. kaum möglich ist, alle denkbaren Möglichkeiten zu prüfen. Dadurch besteht das Risiko, dass sich Planerlnnen für eine Belegung der Gebäudehülle entscheiden, die nicht optimal ist oder sich sogar gegen eine Belegung mit Solarelementen entschieden wird. Der Erfindung liegt daher die Aufgabe zugrunde, die Anordnung von Solarelementen auf einer Belegungsfläche zu vereinfachen und zu optimieren.

Gelöst ist diese Aufgabe durch ein Verfahren zum Erstellen eines Belegungsplans für die Anordnung einer Mehrzahl von Solarelementen auf einer Belegungsfläche gemäß Anspruch 1. Vorteilhafte Ausgestaltungen des erfindungsgemäßen Verfahrens finden sich in den abhängigen Ansprüchen. Hiermit wird der Wortlaut sämtlicher Ansprüche explizit per Referenz in die Beschreibung einbezogen.

Das erfindungsgemäße Verfahren zum Erstellen eines Belegungsplans zur Anordnung einer Mehrzahl von Solarelementen auf einer Belegungsfläche, insbesondere auf einer Gebäudehülle, weist die folgenden Verfahrensschritte auf:
In einem Verfahrensschritt A erfolgt ein Bereitstellen der Belegungsfläche als Flächenmodell. Das Flächenmodell beinhaltet insbesondere Abmessungen der Belegungsfläche, Informationen zur Anordnung von Hindernissen und/oder Informationen zu Spezialflächen mit besonderen Anforderungen.

Üblicherweise besteht eine Gebäudehülle aus verschiedenen Flächen, die zueinander in einer festen Anordnung stehen. Auf diesen Flächen befinden sich Hindernisse wie Fenster oder Türen, die nicht für eine Belegung mit Solarelementen in Frage kommen. Auch kann es Flächen wie Balkonbrüstungen geben, die in einer anderen Ebene wie die umgebende Gebäudehüllfläche liegen. Das Flächenmodell enthält die erforderlichen Informationen zur Anordnung von Hindernissen und/oder Informationen zu Spezialflächen mit besonderen Anforderungen.

Für Solarelemente müssen üblicherweise Mindestabstände zu den Rändern der Gebäudehülle bzw. der Belegungsfläche, zu Hindernissen und zwischen den Solarelementen eingehalten werden. Auch diese Informationen fließen in das Flächenmodell ein. Vorzugsweise ergibt sich im Ergebnis eine belegbare Nettofläche.

In einem Verfahrensschritt B wird ein Muster aus Solarelementen bereitgestellt. Das Muster ist aus einer Mehrzahl Solarelementen zusammengesetzt und erstreckt sich vorzugsweise in alle Richtungen bis ins Unendlich. Dabei ist das Muster vorzugsweise größer als das Flächenmodell. Das Muster aus Solarelementen wird dabei nicht physisch, sondern als Anordnungsplan für Solarelemente in Relation zueinander bereitgestellt.

In einem Verfahrensschritt C erfolgt ein Übereinanderlegen des Musters aus Solarelementen und des Flächenmodells. Das Übereinanderlegen erfolgt vorzugsweise derart, dass das Muster das Flächenmodell vollständig abdeckt. Es ist jedoch ebenfalls möglich, dass ein Muster, welches das Flächenmodell nur teilweise abdeckt, über das Flächenmodell verschoben wird.

In einem Verfahrensschritt D werden die Solarelemente des Musters aus Solarelementen bestimmt, die innerhalb der Belegungsfläche liegen und nicht mit Hindernissen und/oder Spezialflächen kollidieren. Diese Solarelemente werden als platzierbare Solarelemente identifiziert. Dabei müssen die Solarelemente vollständig innerhalb der Belegungsfläche liegen. Solarelemente, die lediglich teilweise in der Belegungsfläche liegen oder vollständig oder teilweise mit Hindernissen und/oder Spezialflächen kollidieren, werden nicht als platzierbare Solarelemente bestimmt.

In einem Verfahrensschritt E erfolgt ein Drehen und/oder Verschieben des Musters aus Solarelementen.

In einem Verfahrensschritt F werden die Solarelemente des Musters aus Solarelementen bestimmt, die nach dem Drehen und/oder Verschieben des Musters innerhalb der Belegungsfläche liegen und nicht mit Hindernissen und/oder Spezialflächen kollidieren. Diese Solarelemente werden als platzierbare Solarelemente bestimmt.

Dabei ist vorzugsweise sowohl vorgesehen, dass entweder jeweils als Ergebnis von Verfahrensschritt D und Verfahrensschritt F ein alternativer Belegungsplan erstellt wird oder ein gemeinsamer Belegungsplan erstellt wird, der die platzierbaren Solarelemente aus dem Verfahrensschritt D und aus Verfahrensschritt F die zusätzlich platzierbaren Solarelemente enthält.

Durch die Anwendung des Verfahrens in der Planungsphase werden nicht bereits tatsächliche Solarelemente angeordnet, sondern die theoretische Möglichkeit evaluiert, ein Solarelement auf einer Gebäudefläche zu platzieren. Die tatsächliche bauliche Umsetzung ist nicht Teil des Belegungsplans, sondern folgt in einem anschließenden Schritt.

Die Erfindung ist in der Erkenntnis der Anmelderin begründet, dass durch die Vorauswahlmöglichkeit eines Musters in effizienter Art und Weise eine quantitativ vorteilhafte und gleichzeitig ästhetisch ansprechende Belegung von Gebäudehüllen mit Solarelementen erreicht werden kann. Durch die unzähligen möglichen Muster bietet das Verfahren einen sehr großen ästhetischen Gestaltungsspielraum, da Planerlnnen vorab unter vielen möglichen Mustern auswählen können, die Drehung des Musters und die genaue Positionierung einstellen und sofort einen Belegungsplan für die Anordnung einer Mehrzahl von Solarelementen auf der Belegungsfläche erhalten.

In einer bevorzugten Ausführungsform der Erfindung werden die Verfahrensschritte D und E mehrfach wiederholt. In dem Verfahrensschritt E wird vorzugsweise vorab ein Drehwinkel sowie eine Verschiebung angegeben.

Ein ausgewähltes Muster wird vorzugsweise automatisch über die Belegungsfläche verschoben und gedreht. Für jede Verschiebung und jeden Drehwinkel wird die Anzahl der platzierbaren Solarelemente bestimmt. Die Anzahl der Zwischenpunkte in zwei Dimensionen, d. h. die Verschiebung, und/oder das erlaubte Drehwinkelintervall und die Anzahl der Drehwinkel wird vorgegeben.

Vorzugsweise wird als Ergebnis des Verfahrens der Belegungsplan mit den meisten platzierbaren Solarelementen der Planerlnnen vorgeschlagen. In einer bevorzugten Ausführungsform der Erfindung sind die folgenden Eingangsparameter durch eine Planerln vorgegeben: Ausgewähltes Muster, ausgewählte Solarelemente, maximaler Drehwinkel und maximale Verschiebung. Für jede Kombination aus ausgewähltem Muster und ausgewähltem Solarelement wird vorzugsweise der Belegungsplan mit den meisten platzierbaren Solarelementen als finaler Belegungsplan vorgeschlagen. Hierdurch ergibt sich der Vorteil, dass Planerlnnen aus mehreren, ästhetisch unterschiedlich anmutenden Belegungsplänen auswählen können.

In einer bevorzugten Ausführungsform des erfindungsgemäßen Verfahrens werden die platzierbaren Solarelemente aus Verfahrensschritt D in eine erste Alternative des zu erstellenden Belegungsplans übertragen und die platzierbaren Solarelemente aus Verfahrensschritt F in eine zweite Alternative des zu erstellenden Belegungsplans übertragen. Vorzugsweise erfolgt ein Vergleich der zumindest zwei Belegungspläne im Hinblick auf Ästhetik der Anordnung der Solarelemente und/oder Solarertrag. Eine Planerln wählt aus, welcher Belegungsplan passender oder ästhetisch ansprechender ist.

In einer bevorzugten Ausführungsform des erfindungsgemäßen Verfahrens erfolgt das Übereinanderlegen des Musters aus Solarelementen und des Flächenmodells in Verfahrensschritt C ausgerichtet an einem Orientierungspunkt. Bei diesem Orientierungspunkt handelt es sich vorzugsweise um einen festgelegten Punkt des Musters, der mit einem festgelegten Punkt des Flächenmodells übereinandergelegt wird. Bevorzugt erfolgt das Verschieben des Musters aus Solarelementen in Verfahrensschritt D anhand einer Verschiebung des Orientierungspunkts, bevorzugt entlang einer Außenkante eines Solarelementes des Muster und/oder anhand einer Verschiebung des Orientierungspunkts des Flächenmodells an einer Außenkante eines Hindernisses des Flächenmodells. Dabei wird der erste Orientierungspunkt im Folgenden als Start-Orientierungspunkt und alle weiteren Orientierungspunkte als Zwischen-Orientierungspunkte bezeichnet. Vorzugsweise sind die Abstände zwischen den Zwischen-Orientierungspunkten durch eine Planerln vorgebbar.

In einer bevorzugten Ausführungsform des erfindungsgemäßen Verfahrens werden die folgenden Verfahrensschritte ausgeführt:
i Bestimmen eines Start-Orientierungspunktes zwischen Muster und Flächenmodell; Bei diesem Start-Orientierungspunkt handelt es sich vorzugsweise um einen festgelegten Punkt des Musters, der mit einen festgelegten Punkt des Flächenmodells übereinandergelegt wird.
ii Bestimmen von zumindest einem ersten verschobenen Zwischen-Orientierungspunkt, bevorzugt von mehreren, vorzugsweise vertikal, verschobenen Zwischen-Orientierungspunkten, entlang einer ersten, vorzugsweise vertikalen, Außenkante eines Solarelements des Musters und zumindest einem zweiten verschobenen Zwischen-Orientierungspunkt, bevorzugt von mehreren, vorzugsweise horizontal, verschobenen Zwischen-Orientierungspunkten, entlang einer zweiten, vorzugsweise horizontalen, Au-βenkante eines Solarelements des Musters;
iii Durchführen des Verfahrensschritts C ausgerichtet an dem Start-Orientierungspunkt; Der Start-Orientierungspunkt wird mit dem festgelegten Punkt des Flächenmodells übereinandergelegt;
iv Durchführen des Verfahrensschritts D;
v Verschieben des Musters aus Solarelementen in Verfahrensschritt E relativ zu dem Flächenmodell, sodass der erste verschobene Zwischen-Orientierungspunkt mit dem festgelegten Punkt des Flächenmodells übereinstimmt; Der festgelegte Punkt des Flächenmodells bleibt konstant;
vi Bestimmen der zusätzlich platzierbaren Solarelemente im Verfahrensschritt F; Dabei werden die zusätzlich platzierbaren Solarelemente im Vergleich zu Verfahrensschritt D bestimmt. Das Ergebnis ist somit ein gemeinsamer Belegungsplan mit den platzierbaren Solarelementen aus den Verfahrensschritten D und F.
vii Übertragen der platzierbaren Solarelemente aus den Verfahrensschritten iv bis vi in eine erste Version des Belegungsplans;

Für die Durchführung des Verfahrens wird ein Muster und ein Start-Orientierungspunkt gewählt. Vorzugsweise werden Anzahl und Lage der Zwischen-Orientierungspunkte gewählt. Je mehr Zwischen-Orientierungspunkte gewählt werden, desto genauer ist das Ergebnis. Allerdings verlängert dies auch die Verfahrensdauer. Vorzugsweise werden die Zwischen-Orientierungspunkte auf den Außenkanten eines Solarelements oder eines Hindernisses gewählt. Insbesondere bevorzugt derart, dass die Verschiebung zu den Zwischen-Orientierungspunkten vertikal und horizontal entlang der Außenkanten eines Solarelements oder eines Hindernisses erfolgt. Die Zwischen-Orientierungspunkte können jedoch auch willkürlich gewählt werden.

Nachdem mit Durchführung der Verfahrensschritte C und D die platzierbaren Solarelemente für das ausgewählte Muster sowie eine erste Lage und Orientierung des Musters bestimmt wurden, wird der übereinstimmend übereinandergelegte Punkt von Muster und Flächenmodell von dem Start-Orientierungspunkt zu dem ersten nächstliegenden Zwischen-Orientierungspunkt verschoben. In Verfahrensschritt vi. werden die zusätzlich platzierbaren Solarelemente nach Durchführung der Verfahrensschritte C und D ausgehend von dem Zwischen-Orientierungspunkt bestimmt. Dies wird für alle Zwischen-Orientierungspunkte entlang der ersten Außenkante wiederholt und es werden jeweils die zusätzlich platzierbaren Solarelemente gespeichert. Nach der Durchführung des Verfahrens ausgehend von letzten Zwischen-Orientierungspunkt wird der sich ergebende Belegungsplan mit einer maximalen Anzahl an platzierbaren Solarelementen bei Verschiebung entlang der ersten Außenkante gespeichert.

Anstelle einer Verschiebung entlang der Außenkanten eines Solarelements des Musters erfolgt alternativ eine Verschiebung entlang der Außenkanten eines Hindernisses. Dazu werden der Start-Orientierungspunk und die Zwischenorientierungspunkte auf den Außenkanten des Hindernisses gewählt und mit einem festgelegten Punkt des Musters aus Solarelementen übereinandergelegt. In diesem Fall bleibt der festgelegte Punkt des Musters aus Solarelementen unverändert und es ergibt sich eine Verschiebung entlang der Außenkanten des Hindernisses.

In einer bevorzugten Ausführungsform der Erfindung wird das Verfahren im Anschluss erneut ausgehend von dem Start-Orientierungspunkt mit einer Verschiebung entlang der zweiten Au-βenkante des Solarelements durchgeführt mit den folgenden Verfahrensschritten:
viii Durchführen des Verfahrensschritts C ausgerichtet an dem Start-Orientierungspunkt;
ix Durchführen des Verfahrensschritts D;
x Verschieben des Musters aus Solarelementen in Verfahrensschritt E ausgerichtet an dem zweiten verschobenen Zwischen-Orientierungspunkt entlang der zweiten Außenkante des Solarelements;
xi Bestimmen der zusätzlich platzierbaren Solarelemente;
xii Wiederholung der Verfahrensschritte x und xi ausgehend von allen Zwischen-Orientierungspunkt entlang der zweiten Außenkante des Solarelements;
xiii Übertragen der platzierbaren Solarelemente aus den Verfahrensschritten ix bis xii in eine zweite Version des zu erstellenden Belegungsplans;

In dieser Ausführungsform des erfindungsgemäßen Verfahrens wird das Verfahren mehrfach hintereinander durchgeführt. Zunächst mit Verschiebungen entlang der ersten Außenkante, vorzugsweise einer vertikal liegenden Außenkante des Solarelements.

Das Muster wird dann in den weiteren Verfahrensschritten ausgerichtet an den Zwischen-Orientierungspunkt entlang der zweiten Außenkante, vorzugsweise einer horizontal liegenden Außenkante, des Solarelements verschoben.

Auch bei den obigen Verfahrensschritten kann anstelle einer Verschiebung entlang der Außenkanten eines Solarelements des Musters alternativ eine Verschiebung entlang der Außenkanten eines Hindernisses erfolgen. Dazu werden der Start-Orientierungspunk und die Zwischenorientierungspunkte auf den Außenkanten des Hindernisses gewählt und mit einem festgelegten Punkt des Musters aus Solarelementen übereinandergelegt. In diesem Fall bleibt der festgelegte Punkt des Musters aus Solarelementen unverändert und es ergibt sich eine Verschiebung entlang der zweiten Außenkanten des Hindernisses.

Nachdem für den letzten horizontal verschoben liegenden Zwischen-Orientierungspunkt die zusätzlich platzierbaren Solarelemente gespeichert wurden, wird der Belegungsplan mit der maximal möglichen Anzahl an Solarelementen festgelegt. Im Anschluss erfolgt vorzugsweise ein Vergleich, ob durch die Verschiebung entlang der ersten oder der zweiten Außenkante mehr Solarelemente platziert werden können.

In einer bevorzugten Ausführungsform der Erfindung wird der Belegungsplan mit den meisten Solarelementen für weitere Schritte verwendet, die optimiert eine größere Anzahl an Solarelementen platzieren können.

In einer bevorzugten Ausführungsform der Erfindung wird zumindest ein zusätzlicher Zwischen-Orientierungspunkt definiert, der nicht auf den Außenkanten eines Solarelements des Musters oder eines Hindernisses liegt. Bevorzugt werden mehrere zusätzliche Zwischen-Orientierungspunkte definiert, die nicht auf den Außenkanten eines Solarelements des Musters oder eines Hindernisses liegen. Ausgehend von der als vorteilhafter befundenen ersten oder zweiten Version des Belegungsplanes werden die Verfahrensschritte v. und vi. ausgerichtet an dem zusätzlichen Zwischen-Orientierungspunkt bzw. vorzugsweise ausgerichtet an allen zusätzlichen Zwischen-Orientierungspunkten wiederholt ausgeführt. Alle Solarelemente, die sich durch diese Verschiebungen zusätzlich platzieren lassen, werden platziert. Je mehr Zwischen-Orientierungspunkte definiert werden, desto engmaschiger prüft das Verfahren, ob sich noch an anderer Stelle Solarelemente platzieren lassen.

In einer bevorzugten Ausführungsform der Erfindung besteht das Muster aus Solarelementen aus einem sich wiederholenden Untermuster. Bevorzugt wird das Verfahren wiederholt durchgeführt, wobei der Abstand zwischen den sich wiederholenden Untermustern für jede Wiederholung der Verfahrensschritte D und E vergrößert wird. Dieses Verfahren ist besonders vorteilhaft, wenn ein regelmäßiger ästhetischer Eindruck gewünscht ist.

In einer bevorzugten Ausführungsform der Erfindung wird die Belegungsfläche in dem Flächenmodell in Teilflächen aufgeteilt, auf welche Teilflächen das Verfahren separat angewandt wird. Eine solche Aufteilung ist beispielsweise vorteilhaft, wenn Flächen der Gebäudehülle in anderen Ebenen angeordnet sind, wie beispielsweise Balkonbrüstungen, oder wenn Teilflächen den Einsatz anderer Solarelemente erforderlich machen. Auch wenn für Teilflächen eine abweichende Optik gewünscht ist, ist es sinnvoll, in dem Flächenmodell Teilflächen vorzusehen, auf die das Verfahren separat angewandt wird.

Gebäudehüllen weisen oftmals übereinander geordnete Hindernisse wie Fenster auf, die in regelmäßigen Abständen angeordnet sind. In einer bevorzugten Ausführungsform des erfindungsgemäßen Verfahrens werden in Verfahrensschritt A in dem Flächenmodell Hindernisse zu Hindernisgruppen zusammengefasst für eine erste Durchführung der Verfahrensschritte B bis F. Bevorzugt werden insbesondere vertikal übereinander angeordnete Hindernisse zu einer Hindernisgruppe zusammengefasst und/oder horizontal nebeneinander angeordnete Hindernisse zu einer Hindernisgruppe zusammengefasst. Die bereits erwähnten Fenster stellen ein Beispiel dar, wie regelmäßig angeordnete Hindernis zu Hindernisgruppen zusammengefasst werden können, um eine bestimmte ästhetische Anmutung für die platzierten Solarelemente zu erreichen.

Vorzugsweise werden in einer weiteren Durchführung der Verfahrensschritte B bis F die Hindernisgruppen aufgehoben und die Verfahrensschritt B bis F für die verbleibenden unbelegten Teilflächen zwischen den Hindernissen durchgeführt. Nach Aufhebung der Hindernisgruppen verbleiben die Hindernisse im Flächenmodell. Die Teilflächen zwischen den Hindernissen, die bisher Teil der Hindernisgruppe waren, sind jedoch nun wieder Flächen im Flächenmodell, die mit Solarelementen belegt werden können. Für diese Teilflächen wird das erfindungsgemäße Verfahren gegebenenfalls separat durchgeführt.

Wie beschrieben tritt bei Gebäudehüllen vergleichsweise oft der Fall auf, dass die meisten Hindernisse, üblicherweise Fenster, vertikal übereinander oder horizontal nebeneinander liegen mit sich wiederholenden Abständen. Die Fenster bilden dann üblicherweise ein Raster. In einem bevorzugten erfindungsgemäßen Verfahren wird ein Hindernis und/oder eine Hindernisgruppe ausgewählt und der Abstand zum horizontal nächstliegenden Hindernis und/oder einer Hindernisgruppe bestimmt. Zwischen diesen beiden Hindernissen und/oder Hindernisgruppen werden vorzugsweise so viele Solarelemente wie möglich horizontal nebeneinander platziert. Diese maximale Anzahl platzierbarer Solarelemente wird als Startreihe zwischen den zwei horizontal benachbarten Hindernissen und/oder Hindernisgruppen angeordnet. Darüber und darunter werden so viele Solarelemente wie möglich als platzierbaren Solarelemente ausgehend von der Startreihe bestimmt, bis ein vertikal nächstliegendes Hindernis und/oder eine Hindernisgruppe angeordnet ist.

Alternativ wird in dem vorgelagerten Verfahrensschritt AO der Abstand zwischen zwei vertikal benachbarten Hindernissen und/oder Hindernisgruppen bestimmt. Dann wird die maximale Anzahl platzierbarer Solarelemente als Startreihe zwischen den zwei vertikal benachbarten Hindernissen und/oder Hindernisgruppen angeordnet und als platzierbare Solarelemente in den zu erstellenden Belegungsplan übertragen. Danach werden so viele Solarelemente wie möglich rechts und links neben der Startreihe platziert bis die Solarelemente auf ein horizontal nächstliegendes Hindernis und/oder eine Hindernisgruppe treffen. Vorzugsweise wird der Abstand zu dem horizontal nächstliegenden Hindernis und/oder der horizontal nächstliegenden Hindernisgruppe bestimmt und ausgehend von der Startreihe möglichst viele Solarelemente bis zu dem horizontal nächstliegenden Hindernis und/oder der Hindernisgruppe platziert.

Diese bevorzugte Ausführungsform des Verfahrens ist besonders vorteilhaft für Gebäudehüllen mit rasterförmig angeordneten Hindernissen, insbesondere wenn die Abstände des Rasters nicht zur Periodizität des ausgewählten Musters passen. Es ergeben sich bevorzugt horizontale oder vertikale Solarelementstreifen bzw. Rechtecke, abhängig vom Abstand der Hindernisse bzw. Hindernisgruppen.

In einer bevorzugten Ausführungsform wird nach der Bestimmung der Startreihe geprüft, wie viele Solarelemente bis zum nächstgelegenen Hindernis platzierbar sind. Abhängig von den bestimmten Abständen wird die Startreihe verschoben, um eine maximale Anzahl an Solarelementen platzieren zu können. Dadurch wird die Situation vermieden, dass an beiden Seiten an den beabstandeten Hindernissen eine Lücke verbleibt, in der kein vollständiges Solarelement mehr platziert werden kann, beide Lücken zusammen jedoch noch ausreichend Platz für ein vollständiges Solarelement bieten würden.

Für einen regelmäßigen ästhetischen Eindruck kann es vorteilhaft sein, die platzierten Solarelemente nachträglich zu verschieben. Vorzugsweise werden in einem nachgelagerten Verfahrensschritt G ein Solarelement oder mehrere nebeneinanderliegende Solarelemente, die zwischen zwei benachbarten Hindernissen oder Hindernisgruppen platzierbar sind, in den Belegungsplan zentriert ausgerichtet und/oder gleichmäßig zwischen den benachbarten Hindernissen oder Hindernisgruppen verteilt. Hierdurch werden Solarelemente oder Gruppen von Solarelementen beispielsweise mittig zwischen zwei Fenstern platziert. Dafür wird der Abstand zwischen den umliegenden Hindernissen gemessen und die Gruppe von Solarelementen mittig zwischen den Hindernissen ausgerichtet oder mit gleichmäßigen Abständen zwischen den Hindernissen verteilt. Hierdurch ergibt sich der Vorteil, dass im Nachhinein eine gewünschte Ästhetik erreicht werden kann.

In einer bevorzugten Ausführungsform der Erfindung werden zumindest zwei der oben beschriebenen Verfahren gleichzeitig durchgeführt, wobei es sich bevorzugt um unterschiedliche Verfahren handelt. Es ist vorteilhaft, wenn ein Verfahren mit einer kurzen Bearbeitungsdauer kombiniert wird mit einem Verfahren mit einer langen Bearbeitungsdauer. Die Planerln erhält dann zunächst einen ersten Vorschlag, der nach Ablauf der längeren Bearbeitungsdauer ergänzt wird um weitere Vorschläge mit alternativen Belegungsmöglichkeiten.

In einer bevorzugten Ausführungsform des erfindungsgemäßen Verfahrens wird das Verfahren als computerimplementiertes Verfahren zum Erstellen eines Belegungsplans nach einem der vorangegangenen Ansprüche realisiert. Weiter beansprucht ist ein Computerprogramm mit Anweisungen, die, wenn das Programm von einem Computer ausgeführt wird, den Computer veranlassen, das erfindungsgemäße Verfahren oder eine bevorzugte Ausführungsform des erfindungsgemäßen Verfahrens auszuführen.

Die Umsetzung des erfindungsgemäßen Verfahrens als Computerprogramm ist vorteilhaft, um automatisiert das erfindungsgemäße Verfahren und/oder eine bevorzugte Ausführungsform durchführen zulassen. Hierdurch ergibt sich der Vorteil, dass Planerlnnen automatisiert und schnell ein optimierter Belegungsplan zur Verfügung gestellt werden kann. Wie beschrieben werden vorzugsweise mehrere unterschiedliche bevorzugte Ausführungsformen des Verfahrens gleichzeitig durchgeführt. Es ist vorteilhaft, wenn Verfahren mit einer kurzen Bearbeitungsdauer kombiniert werden mit Verfahren mit einer langen Bearbeitungsdauer. Die Planerln erhält dann als Ergebnis des Computerprogramms zunächst erste Vorschläge für Belegungsmöglichkeiten, die nach Ablauf der längeren Bearbeitungsdauern ergänzt werden um weitere Vorschläge mit alternativen, optimierten Belegungsmöglichkeiten.

Weitere bevorzugte Merkmale und Ausführungsformen des erfindungsgemäßen Verfahrens werden im Folgenden anhand von Ausführungsbeispielen und den Figuren erläutert. Dabei zeigt:
- Figur 1: eine schematische Darstellung einer Belegungsfläche;
- Figur 2: mit den Teilabbildungen 2a, 2b und 2c schematisch die Verfahrensschritte C und D;
- Figur 3: mit den Teilabbildungen 3a und 3b Zwischenschritte des erfindungsgemäßen Verfahrens mit der Darstellung von Orientierungspunkten;
- Figur 4: einen Belegungsplan als Ergebnis der Durchführung eines erfindungsgemäßen Verfahrens;

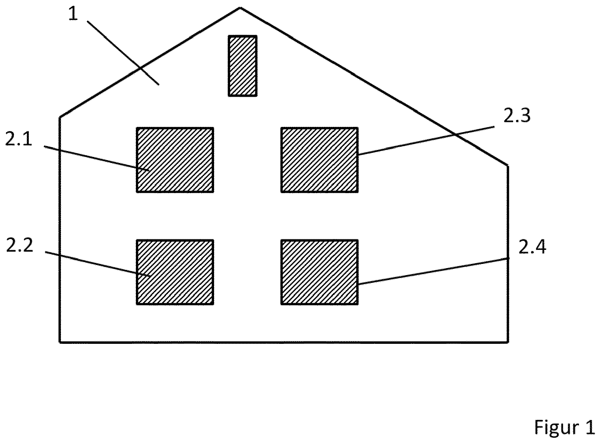

Gebäudehüllen werden mehr und mehr mit Solarelementen bestückt. Es handelt sich somit um eine Belegungsfläche 1 im Sinne der Erfindung. Auf solchen Gebäudehüllflächen befinden sich oft Hindernisse wie Fenster oder Türen, deren Flächen nicht für die Belegung mit Solarelementen in Frage kommen. Figur 1 zeigt eine schematische Darstellung einer Fassadenfläche als Teil der Gebäudehülle. Beispielhaft gekennzeichnet sind vier Hindernisse, vorliegend in Form von vier Fenstern 2.1, 2.2, 2.3, 2.4. Auf der Basis der Belegungsfläche 1 wird das Flächenmodell erstellt. Im Flächenmodell sind alle Flächen, die sich nicht mit Solarelementen belegen lassen, nicht Teil der Belegungsfläche. Weiter enthält das Flächenmodell Informationen zu den Abmessungen der Belegungsfläche, zur Anordnung von Hindernissen 2.1, 2.2, 2.3, 2.4 oder auch Informationen zu Spezialflächen mit besonderen Anforderungen. Solche Spezialflächen sind beispielsweise Balkonbrüstungen, die in einer anderen Ebene liegen wie die umgebende Gebäudehülle. Diese Spezialflächen können mit Solarelementen belegt werden, werden jedoch als Teilflächen mittels einer separaten Durchführung des erfindungsgemäßen Verfahrens belegt werden.

Auch Informationen über erforderliche Mindestabstände, die zu den Rändern des Außenrandes der Belegungsfläche 1 oder zu Hindernissen 2.1, 2.2, 2.3, 2.4 eingehalten werden sollten, sind Informationen des Flächenmodells. Dabei können sowohl, bspw. für schnelle Berechnungen, typische Mindestabstände gewählt werden oder Mindestabstände konkreter Solarelemente, die eingesetzt werden sollen, verwendet werden.

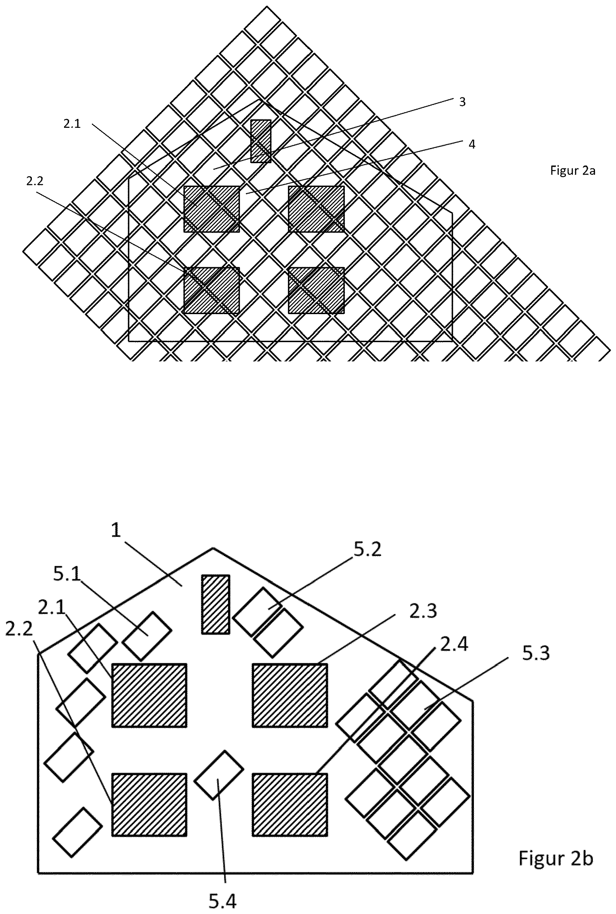

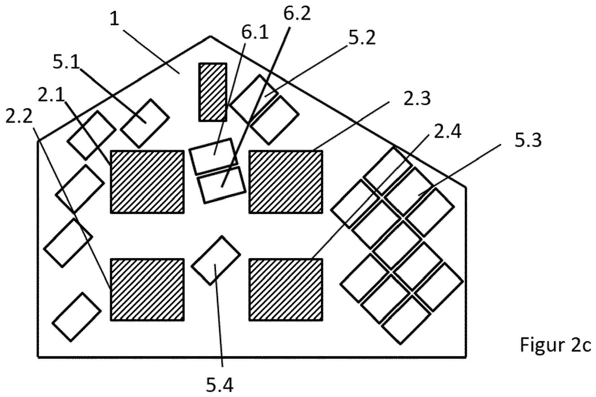

Figur 2 mit den Teilabbildungen 2a, 2b und 2c zeigt das Verfahren zum Erstellen eines Belegungsplans für die Anordnung einer Mehrzahl von Solarelementen auf einer Gebäudehülle 1 mit den Verfahrensschritten C und D.

Eine Planerln wählt ein Muster 4 von Solarelementen 3. Das Muster 4 ist theoretisch beliebig in alle Richtungen fortgesetzt. Vorliegend ist das Muster größer als das Flächenmodell. Hier bietet sich für die Planerln ein sehr großer ästhetischer Gestaltungsspielraum. Das Muster besteht aus einer Wiederholung an Solarelementen 3. Dabei ist es sowohl möglich, identische Solarelemente 3 wiederholt in einem bestimmten Muster 4 aneinanderzusetzen als auch verschiedene Solarelemente 3 zu kombinieren.

Die Planerln kann die Orientierung des Musters 4 und eine Positionierung zwischen Belegungsfläche 1 und Muster 4 einstellen.

In dem Verfahrensschritt D werden dann die Solarelemente 3 des Musters 4 bestimmt, die innerhalb der Belegungsfläche 1 liegen und nicht mit Hindernissen 2.1, 2.2, 2.3, 2.4 und/oder Spezialflächen kollidieren. Diese Solarelemente 3 werden als platzierbare Solarelemente, beispielhaft gekennzeichnet 5.1, 5.2, 5.3, 5.4 bestimmt und werden in einen Belegungsplan übertragen.

Es versteht sich von selbst, dass durch die Anwendung des Verfahrens in der Planungsphase nicht tatsächliche Solarelemente 3 gemeint sind, sondern die theoretische Möglichkeit ein Solarelement 3 auf einer Gebäudefläche 1 zu platzieren. Die tatsächliche bauliche Umsetzung ist nicht Teil des Belegungsplans, sondern folgt in einem anschließenden Schritt.

Teilabbildung 2b zeigt das Ergebnis nach dem Verfahrensschritt D. Auf der Belegungsfläche 1 sind die platzierbaren Solarelemente, beispielhaft gekennzeichnet 5.1, 5.2, 5.3, 5.4, dargestellt. Es ist erkennbar, dass relativ große Flächen der Belegungsfläche 1 nicht mit Solarelementen 3 belegt sind, beispielsweise zwischen den Hindernissen 2.1 und 2.3. Die dort übereinandergelegten Solarelemente des Musters 4 aus Verfahrensschritt C kollidieren mit einem Hindernis 2.1, 2.2, 2.3, 2.4 oder dem Rand der Belegungsfläche 1. Um auch diese Flächen mit Solarelementen besetzen zu können, erfolgt in Verfahrensschritt E ein Drehen des Muster aus Solarelementen und/oder ein Verschieben des Musters 4 aus Solarelementen. Im vorliegenden Fall ermöglicht insbesondere eine Drehung des Muster, vorliegend um einen Drehwinkel von ca. 15°, das Platzieren zusätzlicher Solarelemente. Diese werden in Verfahrensschritt F bestimmt: Bei einem erneuten Abgleich zwischen gedrehtem Muster und Flächenmodell im Hinblick auf Solarelemente, die innerhalb der Belegungsfläche liegen und nicht mit Hindernissen und/oder Spezialflächen kollidieren, können weitere Solarelemente als platzierbare Solarelemente bestimmt werden. Diese Solarelemente sind in Teilabbildung 2c dargestellt und mit den Bezugszeichen 6.1, 6.2 bezeichnet.

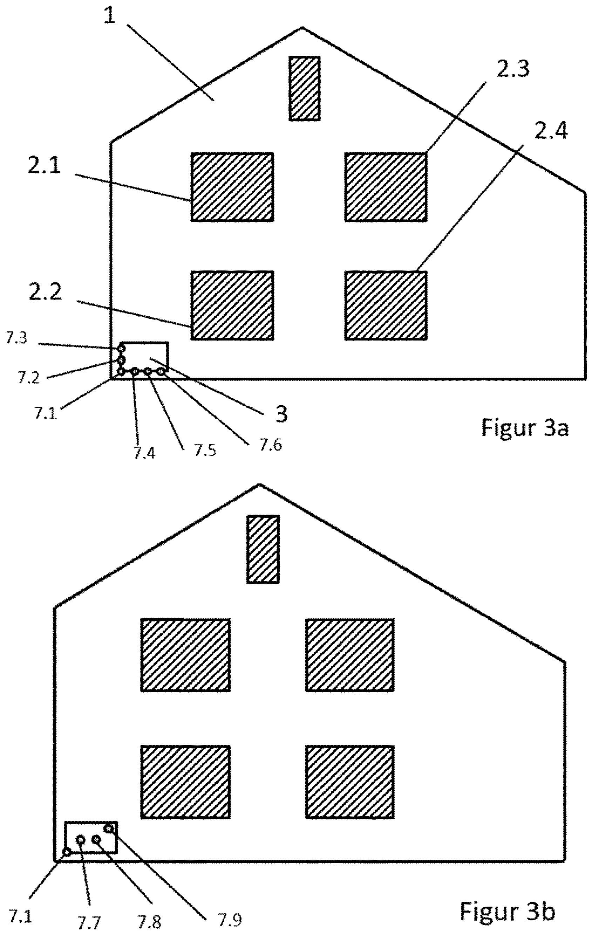

Das Verschieben und Drehen des Musters erfolgt vorliegend anhand von Orientierungspunkten, wie in Figur 3 mit den Teilabbildungen 3a und 3b dargestellt.

Das Übereinanderlegen des Musters 4 aus Solarelementen und des Flächenmodells der Belegungsfläche 1 erfolgt in Verfahrensschritt C ausgerichtet an einem Orientierungspunkt. Bei diesem Orientierungspunkt 7.1 handelt es sich um einen festgelegten Punkt des Musters 4, der mit einem festgelegten Punkt des Flächenmodells der Belegungsfläche 1 übereinandergelegt wird. Dabei wird der erste Orientierungspunkt im Folgenden als Start-Orientierungspunkt 7.1 und alle weiteren Orientierungspunkte als Zwischen-Orientierungspunkte 7.2, 7.3, 7.4, 7.5, 7.6 bezeichnet. Für das Verfahren werden die Zwischen-Orientierungspunkte 7.2, 7.3, 7.4, 7.5, 7.6 definiert. Die Abstände zwischen den Zwischen-Orientierungspunkten sind durch eine Planerln vorgebbar. Die Zwischen-Orientierungspunkte 7.2, 7.3, 7.4, 7.5, 7.6 liegen auf den Außenkanten eines Solarelements 3 des Musters 4. Vorliegend handelt es sich bei der ersten Außenkante um eine vertikal orientierte Außenkante und bei der zweiten Außenkante um eine horizontal orientierte Außenkante.

Es werden die folgenden Verfahrensschritte ausgeführt:
i Bestimmen des Start-Orientierungspunktes 7.1 zwischen Muster 4 und Flächenmodell der Belegungsfläche 1; Bei diesem Start-Orientierungspunkt 7.1 handelt es sich um einen festgelegten Punkt des Musters, der mit einem festgelegten Punkt des Flächenmodells (nicht dargestellt) übereinandergelegt wird.
ii Bestimmen der vertikal verschobenen Zwischen-Orientierungspunkte 7.2, 7.3, entlang der ersten vertikalen Außenkante eines Solarelements des Musters und der horizontal verschobenen Zwischen-Orientierungspunkte 7.4, 7.5, 7.6, entlang der zweiten horizontalen Außenkante des Solarelements des Musters; Der festgelegte Punkt des Flächenmodells (nicht dargestellt) bleibt konstant;
iii Durchführen des Verfahrensschritts C ausgerichtet an dem Start-Orientierungspunkt 7.1, der mit einem festgelegten Punkt des Flächenmodells (nicht dargestellt) übereinandergelegt wird;
iv Durchführen des Verfahrensschritts D;
v Verschieben des Musters 4 aus Solarelementen in Verfahrensschritt E relativ zu dem Flächenmodell, sodass der erste verschobene Zwischen-Orientierungspunkt 7.2 entlang der vertikalen Außenkante des Solarelements 3 mit dem festgelegten Punkt des Flächenmodells übereinstimmt; Der festgelegte Punkt des Flächenmodells bleibt konstant;
vi Bestimmen der zusätzlich platzierbaren Solarelemente im Verfahrensschritt F; Dabei werden die zusätzlich platzierbaren Solarelemente im Vergleich zu Verfahrensschritt D bestimmt. Das Ergebnis ist somit ein gemeinsamer Belegungsplan mit den platzierbaren Solarelementen aus den Verfahrensschritten D und F;
vii Wiederholen der Verfahrensschritte v und vi für alle Zwischenorientierungspunkt 7.2, 7.3 entlang der vertikalen Außenkante des Solarelements 3;
viii Übertragen der platzierbaren Solarelemente aus den Verfahrensschritten iv bis vii in eine erste Version des Belegungsplans;

Für die Durchführung des obigen Verfahrens wird ein Muster 4 und ein Start-Orientierungspunkt 7.1 gewählt, sowie Anzahl und Lage der Zwischen-Orientierungspunkte. Je mehr Zwischen-Orientierungspunkte gewählt werden, desto genauer ist das Ergebnis. Allerdings verlängern mehr Zwischen-Orientierungspunkte die Verfahrensdauer.

Nach der Durchführung des oben beschriebenen Verfahrens wird der sich ergebende Belegungsplan mit einer maximalen Anzahl an platzierbaren Solarelementen bei Verschiebung entlang der ersten Außenkante gespeichert.

Das Verfahren wird im Anschluss erneut ausgehend von dem Start-Orientierungspunkt 7.1 mit einer Verschiebung entlang der horizontal verschobenen Zwischen-Orientierungspunkte 7.4, 7.5, 7.6, entlang der zweiten horizontalen Außenkante des Solarelements 3 des Musters 4 durchgeführt mit den folgenden Verfahrensschritten:
ix Durchführen des Verfahrensschritts C ausgerichtet an dem Start-Orientierungspunkt 7.1;
x Durchführen des Verfahrensschritts D;
xi Verschieben des Musters aus Solarelementen in Verfahrensschritt E ausgerichtet an dem zweiten verschobenen Zwischen-Orientierungspunkt entlang der horizontal verschobenen Zwischen-Orientierungspunkte 7.4, 7.5, 7.6, entlang der zweiten horizontalen Außenkante des Solarelements 3 des Musters 4;
xii Bestimmen der zusätzlich platzierbaren Solarelemente;
xiii Wiederholung der Verfahrensschritte ix und x ausgehend von allen Zwischen-Orientierungspunkten 7.4, 7.5, 7.6 entlang der zweiten Außenkante des Solarelements;
xiv Übertragen der platzierbaren Solarelemente aus den Verfahrensschritten x bis xiii in eine zweite Version des zu erstellenden Belegungsplans;

Das Verfahren wird mehrfach hintereinander durchgeführt. Zunächst mit Verschiebungen entlang der ersten vertikal liegenden Außenkante des Solarelements, dann entlang der zweiten horizontal liegenden Außenkante des Solarelements.

Nachdem für den letzten horizontal verschoben liegenden Zwischen-Orientierungspunkt die zusätzlich platzierbaren Solarelemente gespeichert wurden, wird der Belegungsplan mit der maximal möglichen Anzahl an Solarelementen festgelegt. Im Anschluss erfolgt ein Vergleich, ob durch die Verschiebung entlang der ersten oder der zweiten Außenkante mehr Solarelemente platziert werden können.

Der Belegungsplan mit den meisten Solarelementen wird für die folgenden weiteren Schritte verwendet:
Es werden zusätzliche Zwischen-Orientierungspunkt definiert, vorliegend drei zusätzliche Zwischen-Orientierungspunkt 7.7, 7.8, 7.9, die nicht auf den Außenkanten eines Solarelements 3 des Musters liegen. Ausgehend von der Version des Belegungsplanes mit den meisten Solarelementen werden die Verfahrensschritte v. und vi. ausgerichtet an den zusätzlichen Zwischen-Orientierungspunkten 7.7, 7.8, 7.9 wiederholt ausgeführt. Alle Solarelemente, die sich durch diese Verschiebungen zusätzlich platzieren lassen, werden platziert. Je mehr Zwischen-Orientierungspunkte 7.7, 7.8, 7.9 definiert werden, desto engmaschiger prüft das Verfahren, ob sich noch an anderer Stelle Solarelemente platzieren lassen. Das erhöht die Verfahrensdauer, optimiert jedoch den Belegungsplan im Hinblick auf die Anzahl platzierbarer Solarelemente.

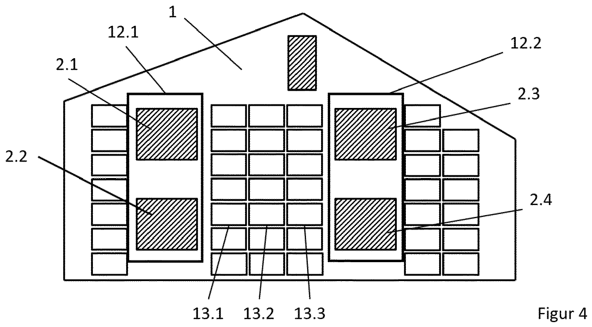

Figur 4 zeigt einen Belegungsplan nach Durchführung eines vorgelagerten Verfahrens, um eine möglichst gleichmäßige Platzierung von Solarelementen zu erreichen. In dem vorgelagerten Verfahrensschritt AO wird der Abstand zwischen zwei horizontal benachbarten Hindernisgruppen 12.1, 12.2 mit den vertikal übereinander liegenden Hindernissen 2.1 und 2.2 in der Hindernisgruppe 12. 1 und den vertikal übereinander liegenden Hindernissen 2.3 und 2.4 in der Hindernisgruppe 12.2 bestimmt. Dann wird die maximale Anzahl platzierbarer Solarelemente als Startreihe 13 mit den Solarelementen 13.1, 13.2 und 13.3 zwischen den zwei horizontal benachbarten Hindernisgruppen 12.1, 12.2 angeordnet und als platzierbare Solarelemente in den zu erstellenden Belegungsplan übertragen. Danach werden so viele Solarelemente wie möglich über und unter der Startreihe 13 platziert, bis die Solarelemente auf ein vertikal nächstliegendes Hindernis und/oder eine Hindernisgruppe treffen. In einer vorteilhaften Ausführung wird der Abstand zu den vertikal nächstliegenden Hindernissen bzw. Hindernisgruppen bestimmt und die Startreihe so verschoben, dass möglichst viele Solarelemente platziert werden können.

Bei Gebäudehüllen mit rasterförmig angeordneten Hindernissen ergeben sich bevorzugt horizontale oder vertikale Solarelementstreifen bzw. Rechtecke, abhängig vom Abstand der Hindernisse bzw. Hindernisgruppen.

### Bezugszeichenliste

- 1: Belegungsfläche
- 2.1; 2.2; 2.3; 2.4: Hindernisse
- 2a; 2b; 2c: Teilabbildungen
- 3: Solarelemente
- 3a; 3b: Teilabbildungen
- 4: Muster
- 5.1; 5.2; 5.3; 5.4: platzierbare Solarelementen
- 6.1; 6.2: Bezugszeichen
- 7.1; 7.2; 7.3; 7.4; 7.5; 7.6: Orientierungspunkt
- 7.7; 7.8; 7.9: Zwischen-Orientierungspunkt
- 12.1; 12.2: benachbarten Hindernisse/Hindernisgruppen
- 13: Startreihe

## Patentansprüche

1. Verfahren zum Erstellen eines Belegungsplans für die Anordnung einer Mehrzahl von Solarelementen (3) auf einer Belegungsfläche (1), insbesondere einer Gebäudehülle, mit folgenden Verfahrensschritten:
A Bereitstellen der Belegungsfläche (1) als Flächenmodell, welches Flächenmodell insbesondere Abmessungen der Belegungsfläche (1), Informationen zur Anordnung von Hindernissen (2.1; 2.2; 2.3; 2.4) und/oder Informationen zu Spezialflächen mit besonderen Anforderungen beinhaltet;
B Bereitstellen eines Musters (4) aus Solarelementen (3);
C Übereinanderlegen des Musters (4) aus Solarelementen (3) und des Flächenmodells;
D Bestimmen der Solarelemente (3) des Musters (4) aus Solarelementen (3), die innerhalb der Belegungsfläche (1) liegen und nicht mit Hindernissen (2.1; 2.2; 2.3; 2.4) und/oder Spezialflächen kollidieren, als platzierbare Solarelemente (5.1; 5.2; 5.3; 5.4);
E Drehen des Musters (4) aus Solarelementen (3) und/oder Verschieben des Musters (4) aus Solarelementen (3);
F Bestimmen der Solarelemente (3) des Musters (4) aus Solarelementen (3), die innerhalb der Belegungsfläche (1) liegen und nicht mit Hindernissen (2.1; 2.2; 2.3; 2.4) und/oder Spezialflächen kollidieren, als platzierbare Solarelemente (5.1; 5.2; 5.3; 5.4);

2. Verfahren zum Erstellen eines Belegungsplans nach Anspruch 1,
**dadurch gekennzeichnet,**
**dass** die Verfahrensschritte D und E mehrfach wiederholt werden.

3. Verfahren zum Erstellen eines Belegungsplans nach Anspruch 1,
**dadurch gekennzeichnet,**
**dass** die platzierbaren Solarelemente (3) aus Verfahrensschritt D in eine erste Alternative des zu erstellenden Belegungsplans übertragen werden und die platzierbaren Solarelemente (3) aus Verfahrensschritt F in eine zweite Alternative des zu erstellenden Belegungsplans übertragen werden und dass ein Vergleich der zumindest zwei Belegungspläne im Hinblick auf Ästhetik der Anordnung der Solarelemente (3) und/oder Solarertrag erfolgt.

4. Verfahren zum Erstellen eines Belegungsplans nach einem der vorangegangenen Ansprüche,
**dadurch gekennzeichnet,**
**dass** das Übereinanderlegen des Musters (4) aus Solarelementen (3) und des Flächenmodells in Verfahrensschritt C ausgerichtet an einem Orientierungspunkt erfolgt, bevorzugt dass das Verschieben des Musters (4) aus Solarelementen (3) in Verfahrensschritt C anhand einer Verschiebung des Orientierungspunktes (7.1; 7.2; 7.3; 7.4; 7.5;7.6) entlang einer Außenkante eines Solarelements des Musters (4) und/oder an einer Außenkante eines Hindernisses (2.1; 2.2; 2.3; 2.4) des Flächenmodells erfolgt.

5. Verfahren zum Erstellen eines Belegungsplans nach einem der vorangegangenen Ansprüche,
**dadurch gekennzeichnet,**
**dass** die Verfahrensschritte D und E n-fach (n ∈ N) wiederholt werden und dass die platzierbaren Solarelemente (3) aus einer ersten Durchführung des Verfahrensschritts D in eine erste Version des zu erstellenden Belegungsplans übertragen werden und dass bei jeder Wiederholung i der Verfahrensschritte D und E eine i-te Version des Belegungsplans erstellt wird, die alle platzierbaren Solarelemente (3) aus den bisherigen Wiederholungen enthalten.

6. Verfahren zum Erstellen eines Belegungsplans nach einem der vorangegangenen Ansprüche, mit folgenden Verfahrensschritten:
i Bestimmen eines Start-Orientierungspunktes zwischen Muster (4) und Flächenmodell;
ii Bestimmen von zumindest einem ersten verschobenen Zwischen-Orientierungspunkt, bevorzugt von mehreren, vorzugsweise vertikal, verschobenen Zwischen-Orientierungspunkten (7.7; 7.8; 7.9), entlang einer ersten, vorzugsweise vertikalen, Außenkante eines Solarelements des Musters (4) und zumindest einem zweiten verschobenen Zwischen-Orientierungspunkt, bevorzugt von mehreren, vorzugsweise horizontal, verschobenen Zwischen-Orientierungspunkten (7.7; 7.8; 7.9), entlang einer zweiten, vorzugsweise horizontalen, Außenkante eines Solarelements des Musters (4);
iii Durchführen des Verfahrensschritts C ausgerichtet an dem Start-Orientierungspunkt;
iv Durchführen des Verfahrensschritts D;
v Verschieben des Musters (4) aus Solarelementen (3) in Verfahrensschritt E relativ zu dem Flächenmodell ausgerichtet an dem ersten verschobenen Zwischen-Orientierungspunkt;
vi Bestimmen der zusätzlich platzierbaren Solarelemente (3);
vii Wiederholen der Verfahrensschritte v und vi für alle Zwischen-Orientierungspunkt entlang der ersten Außenkante des Solarelements des Musters (4);
viii Übertragen der platzierbaren Solarelemente (3) aus den Verfahrensschritten iv bis vi in eine erste Version des zu erstellenden Belegungsplans;
ix Durchführen des Verfahrensschritts C ausgerichtet an dem Start-Orientierungspunkt;
x Durchführen des Verfahrensschritts D;
xi Verschieben des Musters (4) aus Solarelementen (3) in Verfahrensschritt E relativ zu dem Flächenmodell ausgerichtet an dem zweiten verschobenen Zwischen-Orientierungspunkt;
xii Bestimmen der zusätzlich platzierbaren Solarelemente (3);
xiii Wiederholen der Verfahrensschritte x und xi für alle Zwischen-Orientierungspunkt entlang der zweiten Außenkante des Solarelements des Musters (4);
xiv Übertragen der platzierbaren Solarelemente (3) aus den Verfahrensschritten x bis xii in eine zweite Version des zu erstellenden Belegungsplans;

7. Verfahren zum Erstellen eines Belegungsplans nach Anspruch 6,
**dadurch gekennzeichnet,**
**dass** zumindest ein zusätzlicher Zwischen-Orientierungspunkt definiert wird, bevorzugt mehrere zusätzliche Zwischen-Orientierungspunkte (7.7; 7.8;7.9), die nicht auf den Außenkanten eines Solarelements des Musters (4) liegen und ausgehend von der ersten und/oder zweiten Version des Belegungsplans die Verfahrensschritte v und vi ausgerichtet an dem zusätzlichen Zwischen-Orientierungspunkt, vorzugsweise wiederholt, ausgerichtet an allen zusätzlichen Zwischen-Orientierungspunkten (7.7 ;7.8; 7.9), ausgeführt werden.

8. Verfahren zum Erstellen eines Belegungsplans nach einem der vorangegangenen Ansprüche,
**dadurch gekennzeichnet,**
**dass** das Muster (4) aus Solarelementen (3) aus einem sich widerholenden Untermuster besteht, wobei der Abstand zwischen den sich wiederholenden Untermustern für jede Wiederholung der Verfahrensschritte D und E vergrößert wird.

9. Verfahren zum Erstellen eines Belegungsplans nach einem der vorangegangenen Ansprüche,
**dadurch gekennzeichnet,**
**dass** die Belegungsfläche (1) in dem Flächenmodell in Teilflächen aufgeteilt wird, auf welche Teilflächen das Verfahren separat angewandt wird.

10. Verfahren zum Erstellen eines Belegungsplans nach einem der vorangegangenen Ansprüche,
**dadurch gekennzeichnet,**
**dass** in Verfahrensschritt A in dem Flächenmodell Hindernisse (2.1; 2.2; 2.3; 2.4), insbesondere vertikal übereinander angeordnete Hindernisse (2.1; 2.2; 2.3; 2.4)und/oder horizontal nebeneinander angeordnete Hindernisse(2.1; 2.2; 2.3; 2.4), zu Hindernisgruppen (12.1; 12.2) zusammengefasst werden für eine erste Durchführung der Verfahrensschritte B bis F und bevorzugt in einer weiteren Durchführung die Hindernisgruppen aufgehoben werden und die Verfahrensschritte D bis F für die verbleibenden Teilflächen zwischen den Hindernissen (2.1; 2.2; 2.3; 2.4) durchgeführt werden.

11. Verfahren zum Erstellen eines Belegungsplans nach einem der vorangegangenen Ansprüche,
**dadurch gekennzeichnet,**
**dass** in einem vorgelagerten Verfahrensschritt AO der Abstand zwischen zwei horizontal benachbarten Hindernissen und/oder Hindernisgruppen (12.1; 12.2) bestimmt wird und die maximale Anzahl platzierbarer Solarelemente (3) als Startreihe (13) zwischen den zwei horizontal benachbarten Hindernissen und/oder Hindernisgruppen (12.1; 12.2) angeordnet wird und als platzierbare Solarelemente (5.1; 5.2; 5.3; 5.4) in den zu erstellenden Belegungsplans übertragen werden und bevorzugt über und/oder unter der Startreihe (13) weitere Reihen von platzierbaren Solarelementen (3) angeordnet werden bis zu einem vertikal nächstliegenden Hindernis (2.1; 2.2; 2.3; 2.4) oder
**dass** in dem vorgelagerten Verfahrensschritt AO der Abstand zwischen zwei vertikal benachbarten Hindernissen und/oder Hindernisgruppen (12.1; 12.2) bestimmt wird und die maximale Anzahl platzierbarer Solarelemente (5.1; 5.2;5.3; 5.4)als Startreihe (13) zwischen den zwei vertikal benachbarten Hindernissen und/oder Hindernisgruppen (12.1; 12,2) angeordnet wird und als platzierbare Solarelemente (5.1;5.2;5.3; 5.4) in den zu erstellenden Belegungsplans übertragen werden und bevorzugt in horizontaler Richtung rechts oder links der Startreihe (13) weitere Reihen von platzierbaren Solarelemente (3)angeordnet werden bis zu einem horizontal nächstliegenden Hindernis (2.1; 2.2; 2.3; 2.4).

12. Verfahren zum Erstellen eines Belegungsplans nach einem der vorangegangenen Ansprüche,
**dadurch gekennzeichnet,**
**dass** in einem nachgelagerten Verfahrensschritt G ein Solarelement oder mehrere nebeneinanderliegenden Solarelemente (3), die zwischen zwei benachbarten Hindernissen oder Hindernisgruppen (12.1; 12.2) platzierbar sind, in dem Belegungsplan zentriert ausgerichtet und/oder gleichmäßig zwischen den benachbarten Hindernissen oder Hindernisgruppen (12.1; 12.2) verteilt werden.

13. Verfahren zum Erstellen eines Belegungsplans nach einem der vorangegangenen Ansprüche,
**dadurch gekennzeichnet,**
**dass** zumindest zwei Verfahren nach jeweils einem der vorangegangenen Ansprüche gleichzeitig durchgeführt werden, wobei sich die zwei Verfahren unterscheiden.

14. Computer-implementiertes Verfahren zum Erstellen eines Belegungsplans nach einem der vorangegangenen Ansprüche.

15. Computerprogramm mit Anweisungen, die, wenn das Programm von einem Computer ausgeführt wird, den Computer veranlassen, das Verfahren nach einem der Ansprüche 1 bis 13 auszuführen.
